# EUROPEAN PATENT SPECIFICATION

(11) **EP 0 889 989 B1**
(45) Date of publication and mention of the grant of the patent: **02.10.2002**
(21) Application number: 97919803.3
(22) Date of filing: 07.03.1997
(51) Int. Cl.: D21D 5/26, F04D 7/04, F04D 9/06, B01D 19/00

(54) **METHOD AND DEVICE AT THE PUMPING OF A MEDIUM**
VERFAHREN UND VORRICHTUNG ZUM PUMPEN EINES FLUIDEN MEDIUMS
PROCEDE ET DISPOSITIF POUR LE POMPAGE D'UN MILIEU

(30) Priority: 27.03.1996 SE 9601213
(43) Date of publication of application: 13.01.1999
(73) Proprietor: Valmet Fibertech AB, 851 94 Sundsvall (SE)
(72) Inventor: FORSLUND, Kjell, S-863 31 Sundsbruk (SE); KOTKANIEMI, Leo, S-449 44 Nol (SE)
(74) Representative: Sundqvist, Hans
(86) International application number: PCT/SE97/00393
(87) International publication number: WO 97/036044

(56) References cited:
- WO-A-95/02768
- CA-A- 1 277 543

## Description

This invention relates to the pumping of a fluid medium, for example liquid or suspension, containing gas. The invention, more precisely, relates to a method and a device for removing the gas from the medium in a pump.

When pumping a medium containing gas, for example pulp suspensions containing air or another gas, by means of centrifugal pumps, the pumping is rendered more difficult in that gas is collected centrally in the pump in front of the impeller. A gas bubble formed thereby increases in size until the pump ceases to operate.

In order to eliminate this problem, the centrifugal pumps have been designed with impellers, which are provided with openings for evacuating the gas flow from the central portion of the pump and further through evacuation channels out of the pump. According to known technique, usually vacuum pumps are used for evacuating the gas. The gas thus to be evacuated is requested to be practically free of impurities so as to limit the wear on the vacuum pumps.

Especially at the pumping of pulp suspensions problems arise by pulp following along with the gas. This applies particularly to the pumping of pulp at low concentration. The pulp concentration normally is in the range 1-20%. A further problem is that the pulp suspension flowing through cannot be pumped back to the container, to which the pulp pump is connected. A normal vacuum pump cannot manage high temperatures, either.

In CA-A-1277543 upon which the preamble of claims 1 and 3 is based the principle of using an ejector for degassing a centrifugal pulp pump is shown. The ejector is driven by means of an external source such as water, steam or air. However, it is not disclosed how degassing could be performed efficiently in an arrangement without any external source.

In WO-A-95/02768 it is disclosed a centrifugal pump where degassing is performed by means of a centrifugal gas separator. This gas separator is supplied with a gas/liquid mixture from the pump. In the separator gas and liquid are separated by means of the centrifugal force. The gas is withdrawn and the liquid is returned to the pump inlet. In this device it is necessary to withdraw both liquid and gas from the pump which is not efficient.

The present invention has the object to solve the aforesaid problems by using an ejector for evacuating the gas from the medium in the pump, whereby a partial flow of the pumped medium is used as a drive source for the ejector.

The characterizing features of the invention are apparent from the attached claims.

By diverting a partial flow of the pumped medium after the pump, i.e. in the pressure line of the pump, and causing this partial flow to drive an ejector, the suction side of which is coupled to the evacuation channels of the pump, the gas can effectively be removed from the medium in the pump. The partial flow can thereafter be recycled to the container from which the medium is pumped.

The gas-containing medium can consist, for example, of pulp suspensions or liquor from the pulp manufacturing process. Liquor pumps are employed in digester houses, screen rooms, washer rooms, bleach plants etc.

The invention is described in greater detail in the following, with reference to the accompanying drawings illustrating some embodiments of the invention.
Figs. 1-4 show different systems for degassing pulp suspensions.
Figs. 5-6 show different systems for degassing liquor.

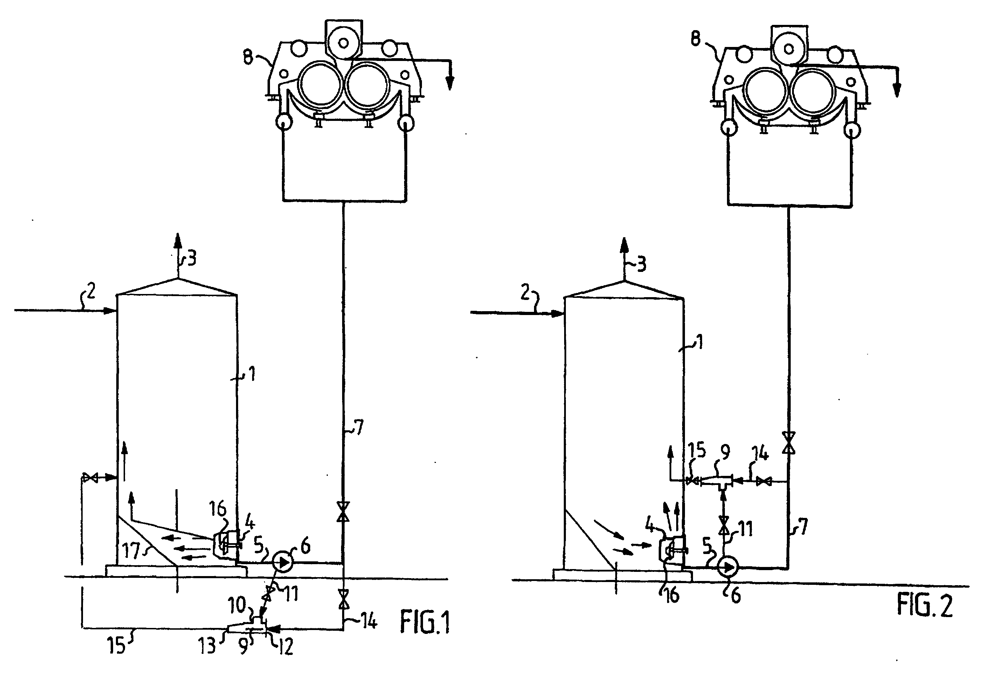

At the embodiment according to Figs. 1-4 a chest 1 is provided for a pulp suspension. The pulp is supplied to the chest through a feed line 2. At the top of the chest 1 a degassing valve 3 is located. The chest further comprises an agitator 4. An outlet line 5 for the pulp is connected to the lower portion of the chest 1. The pulp is pumped by a centrifugal pump 6 from the chest through the outlet line 5 and further through the pressure line 7 of the pump to subsequent processing stages, which in this case consist of a press 8 for dewatering and in combination with washing. An ejector 9 is coupled with its suction side 10 to the pump 6 via a suction line. 11. The ejector effect is obtained in known manner in that a drive medium passes through the ejector from an inlet 12 to an outlet 13.

According to Fig. 1, a branch line 14 is provided from the pressure line 7 to the inlet 12 of the ejector 9, and a return line 15 from the outlet 13 of the ejector back to the chest 1. The return line 15 is connected to the chest 1 directly in front of the outlet line 5 and agitator 4. Said agitator 4 is formed with a propeller 16, which effects a flow along the opposed wall,which is provided with an inclined portion 17. This implies, that the ejector 9 is driven by a partial flow of the medium, so that this partial flow via the suction line 11 sucks with it gas from the pump 6. The gas-enriched partial flow is returned to a portion of the chest 1 where the pulp flows upward due to the agitator effect. At the top of the chest a substantial part of the gas evacuates through the valve 3.

According to Fig. 2, the return line 15 from the ejector 9 is connected to the chest 1 above the outlet line 5 and agitator 4. In this case the rotation direction of the propeller 16 of the agitator 4 is reverse, so that the upward flowing pulp flow in the chest passes past the connection of the return line 15. According to this embodiment, the line laying is more advantageous, because the ejector 9 is located directly above the pump 6 and agitator 4.

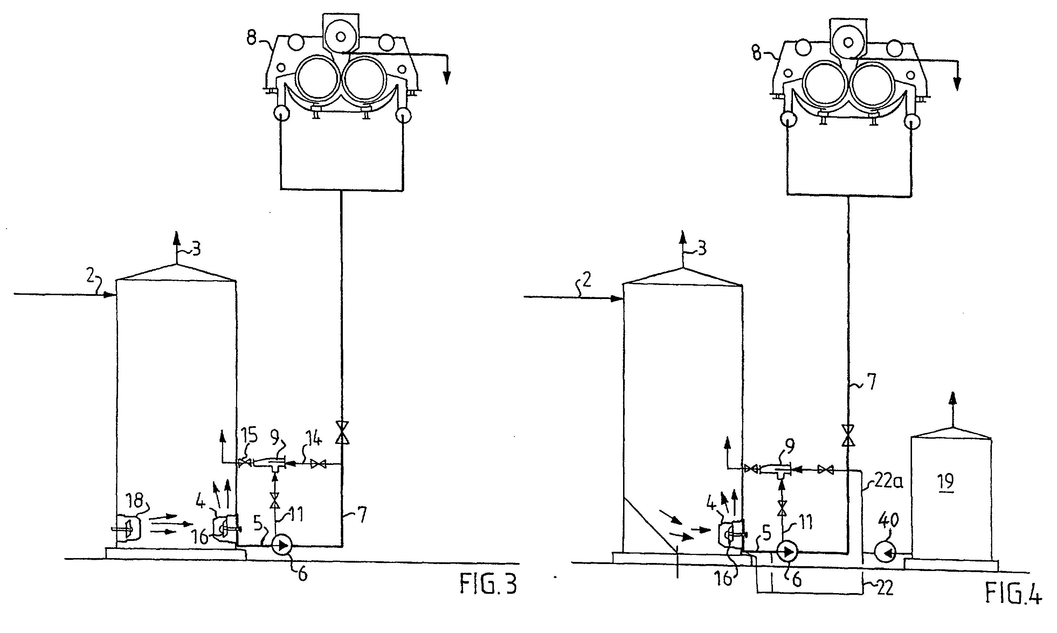

According to Fig. 3, the chest 1 is provided with an extra agitator 18, which can be necessary at large chests. In other respects, the arrangement corresponds to the embodiment shown in Fig. 2.

At high pulp temperatures it may be necessary to partially or entirely replace the partial flow of the pulp suspension by another liquid with lower temperature, preferably liquor used for diluting the pulp.

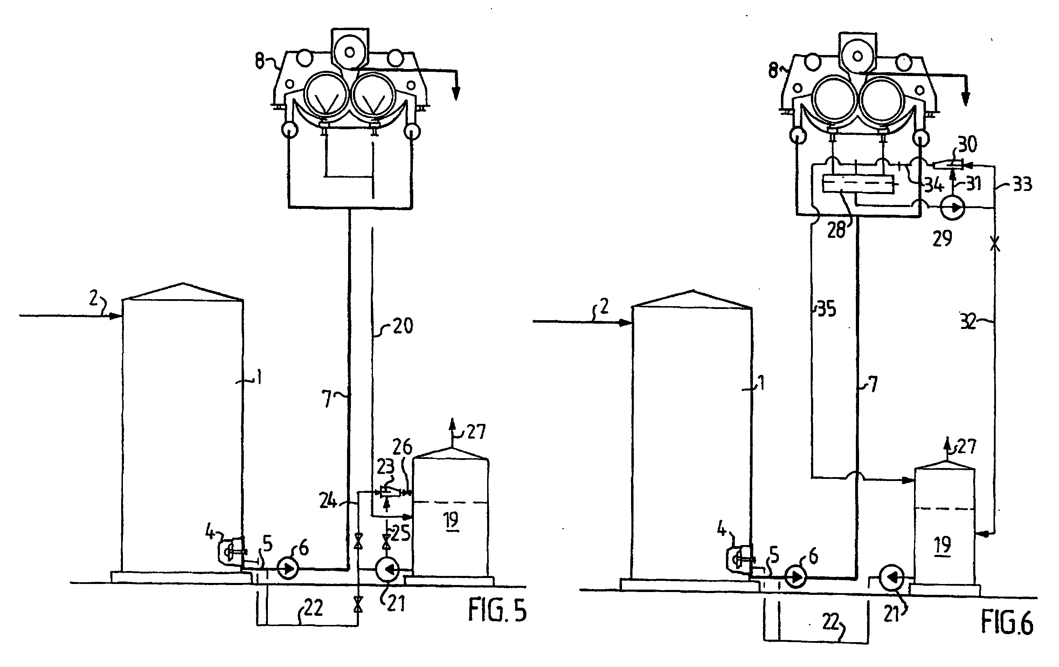

According to Fig. 4, a container 19 for liquor is used for diluting the pulp. The liquor is pumped by a pump 40 through a line 22 to the chest 1 at the agitator 4 and to the outlet line 5. In this case the ejector 9 is driven by a partial flow of liquor via a branch line 22a from the dilution liquor line 22. In other respects, the arrangement corresponds to the embodiment shown in Fig. 2.

According to Fig. 5, a container 19 with liquor is used for diluting the pulp. The liquor arrives via a line 20 from the press 8 where the liquor is pressed out of the pulp. The liquor used for diluting the pulp is pumped ba a degassable centrifugal pump 21. Dilution liquor is there directed through a line 22 to the chest 1 at the agitator 4 and to the outlet line 5. In this case an ejector 23 is driven by a partial flow of liquor via a branch line 24 from the dilution liquor line 22. Degassing of the liquor in the pump 21 takes place by the ejector via a suction line 25. A return line 26 for the partial liquor flow through the ejector is connected to the liquor container 19 above the maximum liquor level. The liquor container is at the top provided with a degassing valve 27.

According to Fig. 6, a glass gauge 28 for filtrate from the washing press 8 is located below the press. A degassable liquor pump 29 can there be connected to the glass gauge 28 with an accessory ejector 30 for degassing via a suction line 31. The liquor pump 29 pumps the liquor through a line 32 to the liquor container 19. This implies, that necessary filtrate flow from the press 8 can be obtained without any great difference in level.

In this case the ejector 30 is driven by a partial flow of the liquor via a branch line 33 from the line 32. A return line 34 for the partial flow through the ejector 30 is connected to a line 35 for degassing the glass gauge 28. This line 35 is connected to the liquor container 19 above the maximum liquor level. This arrangement further implies that the size of the liquor container 19 cen be reduced substantially.

The invention, of course, is not restricted to the embodiments described above, but can be varied within the scope of the invention idea.

## Claims

1. A method of degassing a gas-containing fluid medium including pumping of the medium from a container (1,19) by a centrifugal pump (6,21,29), which is designed for gas separation where the gas is evacuated by the suction effect from an ejector (9,23,30), **characterized in that** a partial flow of the pumped medium is diverted in a branch line (14,24,33) after the pump (6,21,29) and used as drive source for the ejector (9,23,30) and that the partial flow after the ejector is returned in a return line (15, 26, 34, 35) to said container (1,19) from which the gas is evacuated through a degassing valve (3, 27).

2. A method as defined in claim 1, **characterized in that** the medium consists of liquor from the pulp manufacturing process.

3. A device for degassing a gas-containing fluid medium including a centrifugal pump (6,21,29) for pumping of the medium from a container (1,19), said pump being designed for gas separation, and an ejector (9,23,30) for evacuating the gas from the pump, **characterized in that** a branch line (14,24,33) from the pressure line (7,22,32) of the centrifugal pump (6,21,29) is coupled to the inlet of the ejector (9,23,30) for driving the ejector with a partial flow of the medium and a return line (15,26,34,35) for the partial flow from the outlet of the ejector (9,23,30) to said container (1,19), which is provided with a degassing valve (3, 27).

4. A device as defined in claim 3, **characterized in that** the centrifugal pump (29) is provided to pump liquor from a glass gauge (28) for filtrate from a press (8) to a liquor container (19), and the return line (34,35) from the ejector (30) is connected to said liquor container (19).

## Patentansprüche

1. Verfahren zum Entgasen eines Gas enthaltenden fluiden Mediums, umfassend das Pumpen des Mediums aus einem Behälter (1, 19) durch eine Zentrifugalpumpe (6, 21, 29), die zur Gasabscheidung ausgelegt ist, wobei das Gas durch die Saugwirkung von einem Ejektor (9, 23, 30) evakuiert wird,
**dadurch gekennzeichnet,**
**dass** ein Teilstrom des gepumpten Mediums in eine Abzweigleitung (14, 24, 33) nach der Pumpe (6, 21, 29) abgeleitet wird und als Antriebsquelle für den Ejektor (9, 23, 30) verwendet wird und dass der Teilstrom nach dem Ejektor in einer Rückleitung (15, 26, 34, 35) zu dem Behälter (1, 19) zurückgeleitet wird, von dem das Gas durch ein Entgasungsventil (3, 27) evakuiert wird.

2. Verfahren nach Anspruch 1,
**dadurch gekennzeichnet,**
**dass** das Medium aus einer Flotte aus dem Pulpenherstellungsprozess besteht.

3. Vorrichtung zur Entgasung eines Gas enthaltenden fluiden Mediums, umfassend eine Zentrifugalpumpe (6, 21, 29) zum Pumpen des Mediums aus einem Behälter (1, 19), wobei die Pumpe zur Gasabscheidung ausgelegt ist, und einen Ejektor (9, 23, 30) zum Evakuieren des Gases aus der Pumpe,
**dadurch gekennzeichnet,**
**dass** eine Abzweigleitung (14, 24, 33) von der Druckleitung (7, 22, 32) der Zentrifugalpumpe (6, 21, 29) an den Einlass des Ejektors (9, 23, 30) zum Antrieb des Ejektors mit einem Teilstrom des Mediums und eine Rückleitung (15, 26, 34, 35) für den Teilstrom von dem Auslass des Ejektors (9, 23, 30) an den Behälter (1, 19) angeschlossen ist, der mit einem Entgasungsventil (3, 27) versehen ist.

4. Vorrichtung nach Anspruch 3,
**dadurch gekennzeichnet,**
**dass** die Zentrifugalpumpe (29) zum Pumpen von Flotte von einem Flüssigkeitsstandsglas (28) für Filtrat von einer Presse (8) zu einem Flottenbehälter (19) vorgesehen ist, und die Rückleitung (34, 35) von dem Ejektor (30) mit dem Flottenbehälter (19) verbunden ist.

## Revendications

1. Procédé de dégazage d'un milieu fluide contenant du gaz incluant le pompage du milieu à partir d'un conteneur (1, 19) par une pompe centrifuge (6, 21, 29), lequel est conçu pour une séparation du gaz où le gaz est évacué par l'effet d'aspiration à partir d'un éjecteur (9, 23, 30), **caractérisé en ce qu'**un écoulement partiel du milieu pompé est dérivé dans un embranchement (14, 24, 33) après la pompe (6, 21, 29) et utilisé comme source d'entrainement pour l'éjecteur (9, 23, 30) et **en ce que** l'écoulement partiel après l'éjecteur est renvoyé dans une conduite de renvoi (15, 26, 34, 35) vers ledit conteneur (1, 19) à partir duquel le gaz est évacué à travers une soupape de dégazage (3,27).

2. Procédé selon la revendication 1, **caractérisé en ce que** le milieu est constitué d'une liqueur provenant du processus de fabrication de la pulpe.

3. Dispositif pour dégazer un milieu fluide contenant du gaz comprenant une pompe centrifuge (6, 21, 29) pour un pompage du milieu à partir d'un conteneur (1, 19), ladite pompe étant conçue une séparation de gaz, et un éjecteur (9, 23, 30) pour évacuer le gaz de la pompe, **caractérisé en ce qu'**un embranchement (14, 24, 33) à partir de la ligne de pression (7, 22, 32) de la pompe centrifuge (6, 21, 29) est couplé à l'orifice d'entrée de l'éjecteur (9, 23, 30) pour commander l'éjecteur avec un écoulement partiel du milieu et une conduite de renvoi (15, 26, 34, 35) pour l'écoulement partiel de l'orifice de sortie de l'éjecteur (9, 23, 30) audit conteneur (1, 19), lequel est pourvu d'une soupape de dégazage (3, 27).

4. Dispositif selon la revendication 3, **caractérisé en ce que** la pompe centrifuge (29) est prévue pour pomper une liqueur à partir d'un verre gradué (28) pour un produit filtré à partir d'une presse (8) vers un conteneur de liqueur (19), et la conduite de renvoi (34, 35) à partir de l'éjecteur (30) est raccordée audit conteneur de liqueur (19).
